# EUROPEAN PATENT APPLICATION

(11) **EP 1 457 434 A2**
(43) Date of publication of application: **15.09.2004**
(21) Application number: 04251379.6
(22) Date of filing: 10.03.2004
(51) Int. Cl.: B65D 83/08

(54) **Container**

(30) Priority: 12.03.2003 JP 2003067221
(71) Applicant: Sakamoto Steel Ruledie, Inc., Saitama-ken 367-00247 (JP)
(72) Inventor: Sakamoto, Yuzo Sakamoto Steel Ruledie, Inc., Saitama-ken 367-0247 (JP)
(74) Representative: Johnstone, Douglas Ian

(57) **Abstract**

A parallelepiped cardboard container (1) comprising a container main body (2). A top (2a) of the main body (2) has an opening portion (10) a central portion of which is defined by a pair of opposed flaps (3a,3b) which are pivotable upwardly and downwardly about creases (6) at their proximal sides. A pair of opposed side flaps (4a,4b,4c,4d) are positioned at each end of the pivotable flaps (3a,3b). Cuts (5) in the top (2a) defining the flaps have a wave-form with a pitch of 0.1mm to 3.0mm and are formed by a cutting tool with a correspondingly wave-shaped blade. Harm to the fingers of a user and the need for a sealing container cover are avoided and a paper, in the process of being removed from the container (1), will be held securely by the flaps (3a,3b,4a,4b,4c,4d).

## Description

The present invention relates to a container for accommodating a number of papers or the like, such as tissue papers, that are placed one upon another and are folded, and are successively removed from the container.

A conventional cardboard container for accommodating a number of papers or the like, such as tissue papers, that are placed one upon another and are folded, is disclosed in patent application JP-A-P2002-002836. In the container disclosed therein for tissue papers an opening is provided in the top wall of the container, and a plastic film is attached to the opening portion for closing it, the film being provided with perforations for facilitating the removal of the tissue papers.

However, the container referred to above is configured such that a plastic film is attached to the opening portion, thus, in manufacturing, there is the need for preparing the plastic film, and attaching it to the opening portion, which increases the manufacturing cost, and when the container for tissue papers is to be discarded as a used one, the plastic film must be peeled from the container for tissue papers, sorted, and discarded, from the viewpoint of the environmental protection; therefore a problem of the user being requested to take this extra step arises.

Having been developed in consideration of the above problem, the present invention eliminates the need for using a plastic film, which is used with the above-mentioned conventional container for tissue papers, and is intended to provide a container comprising a high-performance opening portion which offers excellent operability for removal of a paper or the like, such as a tissue papers, and yet eliminates the possibility of the user's fingers being accidentally injured during removal of a paper or the like, such as a tissue paper or during opening or unsealing the container, and the possibility of the paper or the like, such as a tissue paper, being damaged as it is being removed from the container.

The container as claimed in claim 1 provides a container comprising a container main body for accommodating a number of papers or the like, such as tissue papers, that are placed one upon another and are folded; the container having an opening portion for removal of said papers or the like which opening portion is formed by cutting a part of a top of the container main body, wherein a cut constituting said opening portion has a wave-form with a pitch of 0.1 mm to 3.0 mm.

Preferably the container main body is in the form of a rectangular parallelepiped

Preferably said opening portion is composed of a pair of flaps which are movable up and down which are formed around a cut in a middle area of the top; a pair of creases which are formed at proximal ends of the pair movable flaps in the areas opposite to said cut in the middle area; and cuts which are formed by connecting the opposite ends of said cut in the middle area with opposite ends of said pair of creases, and the respective cuts constituting said opening portion have a wave-form with a pitch of 0.1 mm to 3.0 mm.

Preferably said opening portion is formed as a whole approximately rectangularly on the top of the container main body, and comprises a pair of central flaps which are movable up and down for removal of said papers or the like, and pairs of side flaps which are formed symmetrically on both sides of the movable flaps, with a cut between said pair of movable flaps; between the respective pairs of side flaps; between the movable flaps and the side flaps; and between side edges of the side flaps and the upper face forming the top of the container main body, and a crease being formed at the respective proximal ends of the pair of movable flaps and the pairs of side flaps, wherein the respective cuts constituting said opening portion have a wave-form with a pitch of 0.1 mm to 3.0 mm.

Preferably the or each wave-form cut has a pitch of 0.1 mm.

Preferably the container is made of cardboard.

Preferably the or each wave-form cut is formed with a cutting tool with a waved blade.

According to the present invention, the respective cuts for the flaps which are movable up and down and the respective cuts between the movable flaps and the side flaps constituting said opening portion, are provided with a waved blade geometry which has a pitch of 0.1 to 3.0 mm, preferably 0.1 mm. Thus, various high-performance containers can be provided which assure the effective removal of papers or the like, such as a tissue papers, the ability for the movable flaps and the side flaps to effectively hold a paper or the like, and improved sanitation resulting from the covering function of the side flaps. Furthermore the configuration of the opening eliminates the possibility of a user's fingers being accidentally injured when a paper or the like, such as a tissue paper is being removed or when opening or unsealing of the container occurs. Also the possibility of a paper or the like, such as a tissue paper, being damaged when it is being removed from the container is avoided as a result of the configuration of the opening.

In addition, the need for attaching a plastic film to the opening portion, as with the above mentioned conventional container is eliminated. This can reduce the manufacturing cost, and simplify the disposal of the container by a user, and provide a container the design of which is environmentally conscious.

The invention will now be described by way of example only with reference to the accompanying drawings, in which:
FIG. 1 is a perspective view showing the appearance of a container according to an embodiment of the present invention;
FIG. 2 is a partially enlarged perspective view of the container according to the embodiment of the present invention;
FIG. 3 is a schematic drawing showing a punching die for forming a cut in the paper container according to the embodiment of the present invention;
FIG. 4 is a perspective view showing a waved blade cutting tool for forming a cut in the container according to the embodiment of the present invention;
FIG. 5 is a sectional view showing the container according to the embodiment of the present invention prior to removal of papers or the like;
FIG. 6 is a sectional view showing the container according to the embodiment of the present invention when it has just been opened;
FIG. 7 is a sectional view showing the container according to the embodiment of the present invention when a paper or the like is being removed therefrom;
FIG. 8 is a perspective view showing the container according to the embodiment of the present invention when a paper or the like is being removed therefrom; and
FIG. 9 is a sectional view showing the container according to the embodiment of the present invention after the first paper or the like has been removed therefrom.

There follows a non-limiting description of an embodiment of the present invention.

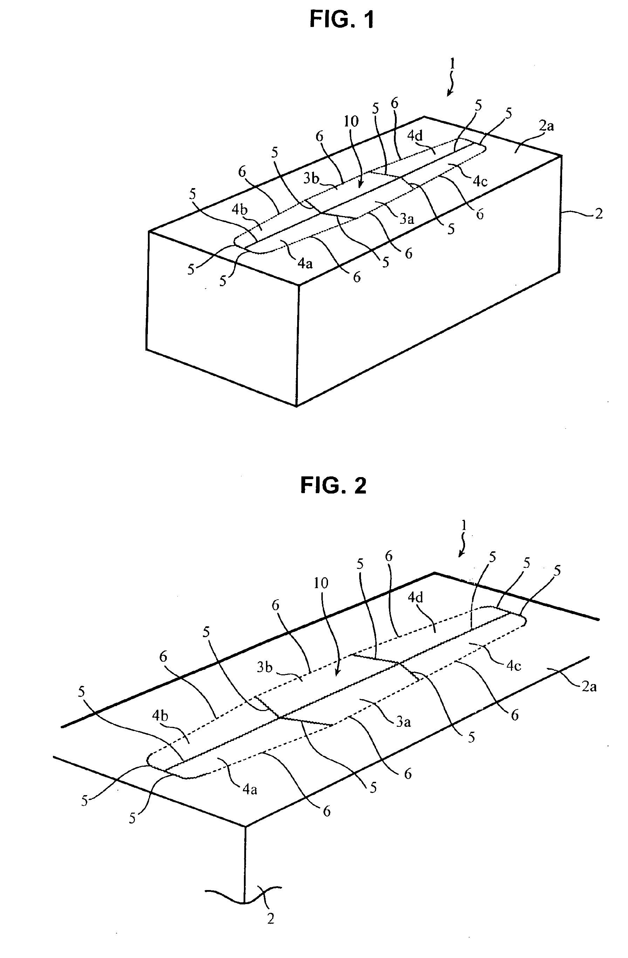

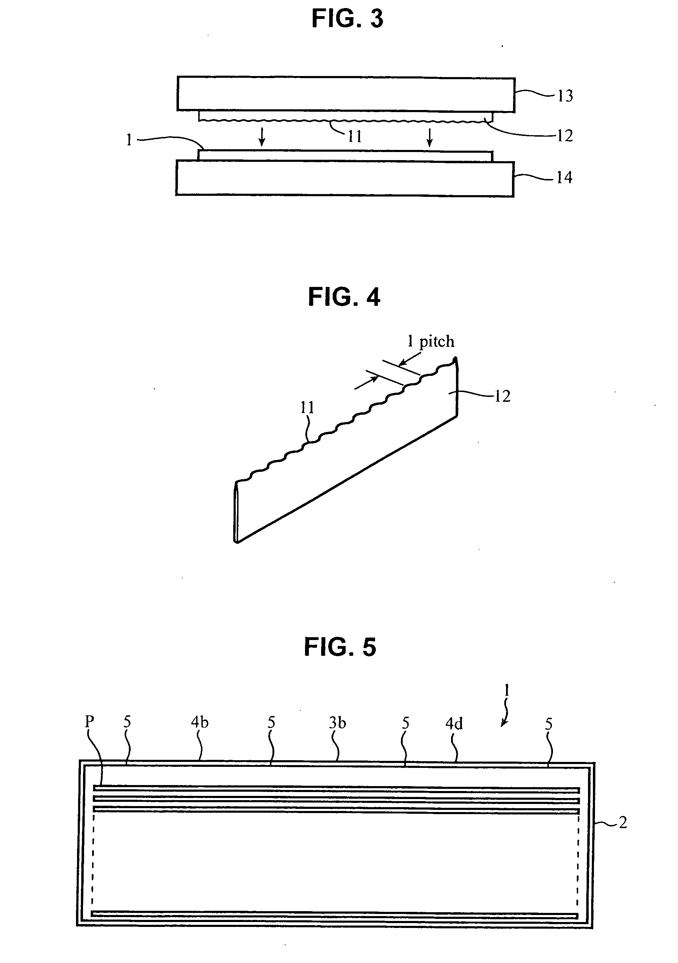

FIG. 1 is a perspective view showing the appearance of a container 1 according to one embodiment of the present invention, which is made of cardboard but may alternatively be made of paper. The container 1 comprises a container main body 2 in the form of a rectangular parallelepiped that can accommodate a number of papers or the like P (see FIG. 5), such as tissue papers, that are placed one upon another and are folded; and an opening portion 10 for removing said paper or the like P which opening is formed approximately rectangularly on the top of the container main body 2, and is comprised of a pair of central flaps 3a, 3b which are movable up and down for removing papers or the like P, and pairs of side flaps 4a, 4b, 4c, 4d which are formed symmetrically on both sides of the flaps 3a, 3b which move up and down.

FIG. 2, is an enlarged view of said opening portion 10 which is configured by forming a cut 5 by cutting between said pair of movable flaps 3a, 3b; between the respective pairs of side flaps 4a, 4b, 4c, 4d; between the movable flaps 3a, 3b and the side flaps 4a, 4b, 4c, 4d; and further between side edges of the side flaps 4a, 4b, 4c, 4d, and the upper face 2a forming the top of the container main body 2. The opening portion 10 also includes a crease 6 as shown with a dotted line at the respective rear ends of the pair of movable flaps 3a, 3b and the pairs of side flaps 4a, 4b, 4c, 4d.

As shown in FIG. 3 and FIG. 4, the respective cuts 5 which constitute said opening portion 10 are created by a cutting process with forming dies which process involves mounting a waved blade cutting tool 12 which has blade portion 11 having a pitch of 0.1 to 3.0 mm, preferably, 0.1 mm, to an upper die 13; loading the container 1 before assembling on a lower die 14; and dropping the upper die 13 towards the lower die 14.

As a result of this, said respective cuts 5 are provided with a minute geometry which has a pitch of 0.1 to 3.0 mm, preferably 0.1 mm, corresponding to the blade portion 11 of the waved blade cutting tool 12.

The reasons why said respective cuts 5 are provided with a minute blade geometry which has a pitch of 0.1 to 3.0 mm, preferably, 0.1 mm are the necessity of assuring ease of opening; preventing a user's fingers from being injured when removing a paper or the like P; providing a sufficient capability of holding a paper or the like P; and avoiding damaging the paper or the like P being removed when it contacts and engages the cut.

In other words, if said cuts 5 are provided with a minute blade geometry which has a pitch of under 0.1 mm, the capability of holding the paper or the like P for preventing it from dropping back into the container will be insufficient, and contrarily, if the pitch exceeds 3.0 mm, the degree of engagement of the cut with the paper or the like P being removed will be too high resulting in damage thereto.

Said creases 6 are formed by perforation, cutting with a reel, waved, or straight blade, scoring, or the like.

The opening portion 10 may be composed of a pair of flaps 3a, 3b which are movable up and down and which are formed around a cut 5 in the middle area; a pair of creases 6, 6 which are formed at the rear ends of the pair of movable flaps 3a, 3b, i.e., in areas opposite to said cut 5 in the middle area; and cuts 5, 5 which are formed by connecting the right and left ends of said cut 5 in the middle area with the right and left ends of said pair of creases 6, 6. The cuts constituting said opening portion 10 are formed by using a waved blade cutting tool which blade has a pitch in the range of 0.1 mm to 3.0 mm, preferably 0.1 mm.

Next, with reference to FIG. 5 to FIG. 9, the function of the container 1 according to the one embodiment of the present invention will be described.

Before opening of the container 1 according to the present embodiment, the pair of movable, central flaps 3a, 3b for removal of papers or the like P, and the pairs of side flaps 4a, 4b, and side flaps 4c, 4d are flat on the top of the container main body 2.

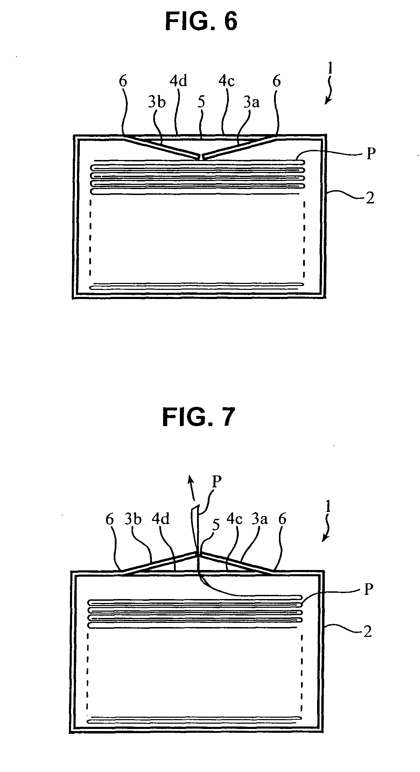

In order to remove a paper or the like P from the inside of the container main body 2, the user presses down the movable flaps 3a, 3b with two fingers as shown in FIG. 6. By doing this, the movable flaps 3a, 3b are folded down at the creases 6, and the top layer of paper or the like P is exposed. Then the user can then pinch the first paper or the like P with two fingers, for example, and pull it upwardly from the container main body 2.

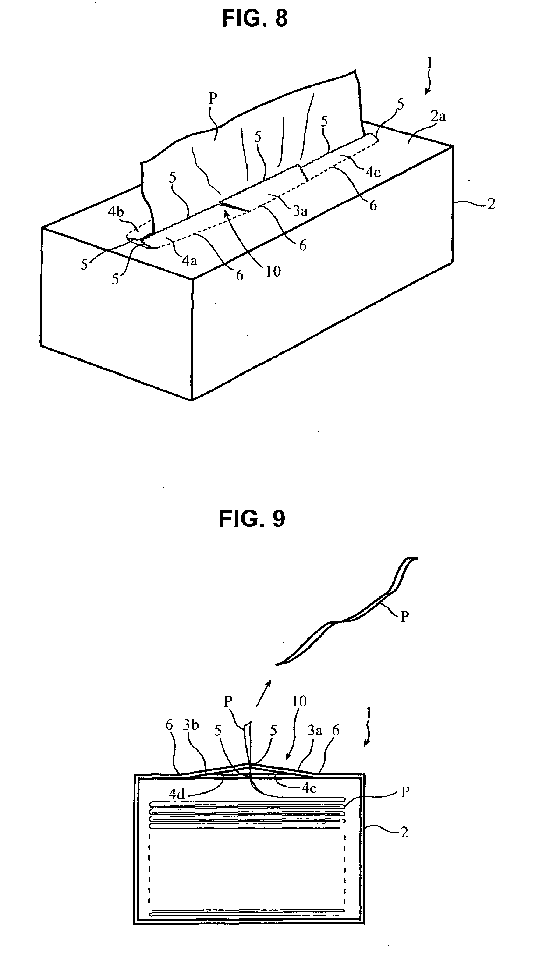

FIG. 7 and FIG. 8 show the first paper or the like P, such as a tissue paper, being pulled upwardly from the container main body 2.

When a paper or the like P is removed upward, the movable flaps 3a, 3b which were initially folded down are inverted or bent in the opposite direction as the paper or the like P is moved upward, and folded up at the crease 6. The paper or the like P supported by the flaps with the opposed cuts 5 contacting opposite surfaces of the first paper or the like P.

The pairs of side flaps 4a, 4b, 4c and 4d are also folded up, and the opposed cuts 5 of these side flaps 4a, 4b 4c and 4d also contact opposite surfaces of the first paper or the like P.

By pulling the first paper or the like P upwardly from the container main body 2, the second paper or the like P, which is folded in conjunction with the first paper or the like P, is also pulled upward, being interlocked with the first paper or the like P (this statement is also applicable to the third and subsequent successive papers or the like P).

Once the first paper or the like P is completely removed from the container main body 2, as shown in FIG. 9, a leading edge of the second paper or the like P is exposed in the opening portion 10 in the container main body 2, with the opposed cut edges of the movable flaps 3a, 3b, the side flaps 4a, 4b, 4c and 4d contacting opposite surfaces of the second paper or the like P, respectively.

In other words, the movable flaps 3a, 3b, the side flaps 4a, 4b, 4c and 4d function not only as paper holders to prevent a paper or the like P from dropping back into the container, but also as covers to prevent dirt and dust, insects and the like from entering the inside of the container main body 2.

Such functions of the movable flaps 3a, 3b, the side flaps 4a, 4b,4c and 4d are maintained while the papers or the like P, which are placed one upon another and folded, in the container main body 2 are used one after another and finally used up.

With the container 1 according to the present embodiment, the respective cuts 5 for the movable flaps 3a, 3b, and the side flaps 4a, 4b, 4c and 4d in said opening portion 10 are provided with a blade geometry which has a pitch of 0.1 mm to 3.0 mm, and preferably, 0.1 mm. Thus, various high-performance containers can be provided which assure excellent operability for the removal of papers or the like P, such as tissue papers, holdability for paper or the like, and sanitation, and yet eliminate the possibility of the user's fingers being accidentally injured when removing a paper or the like, such as a tissue paper, in opening or unsealing the container 1, and the possibility of the paper or the like, such as a tissue paper, being damaged as it is removed from the container 1.

In addition, with the container 1 according to the present embodiment, the need for attaching a plastic film to the opening portion, as with conventional containers, is eliminated. This can reduce the manufacturing cost, and simplify disposal of the paper container 1 by the user and yet provide a container the design of which is environmentally-conscious.

The container 1 according to the present embodiment can be used not only as a container for tissue papers, but also as one for various thin papers for packaging foods and the like.

According to the present invention as described above in detail, a high-performance container is provided which can lower the manufacturing cost, assure operability for the removal of a paper or the like, such as a tissue paper, assure holdability for paper or the like, and assure sanitation, and yet eliminate the possibility of the user's fingers being accidentally injured and the possibility of the paper or the like being damaged.

## Claims

1. A container (1) comprising a container main body (2) for accommodating a number of papers (P) or the like, such as tissue papers, that are placed one upon another and are folded; the container having an opening portion (10) for removal of said papers (P) or the like which opening portion (10) is formed by cutting a part of a top (2a) of the container main body (2), wherein
a cut (5) constituting said opening portion (10) has a wave-form with a pitch of 0.1 mm to 3.0 mm.

2. The container (1) according to claim 1 wherein said container main body (2) is in the form of a rectangular parallelepiped.

3. The container (1) according to claim 2 wherein said opening portion (10) is composed of a pair of flaps (3a,3b) which are movable up and down which are formed around a cut (5) in a middle area of the top (2a); a pair of creases (6) which are formed at proximal ends of the pair movable flaps (3a,3b) in the areas opposite to said cut (5) in the middle area; and cuts (5) which are formed by connecting the opposite ends of said cut (5) in the middle area with opposite ends of said pair of creases (6) , and the respective cuts (5) constituting said opening portion (10) have a wave-form with a pitch of 0.1 mm to 3.0 mm.

4. The container (1) according to claim 2 wherein said opening portion (10) is formed as a whole approximately rectangularly on the top (2a) of the container main body (2), and comprises a pair of central flaps (3a,3b) which are movable up and down for removal of said papers (P) or the like, and pairs of side flaps (4a,4b,4c,4d) which are formed symmetrically on both sides of the movable flaps (3a,3b), with a cut (5) between said pair of movable flaps (3a,3b); between the respective pairs of side flaps (4a,4b,4c,4d); between the movable flaps (3a,3b) and the side flaps (4a,4b,4c,4d); and between side edges of the side flaps (4a,4b,4c,4d) and the upper face (2a) forming the top of the container main body (2) , and a crease (6) being formed at the respective proximal ends of the pair of movable flaps (3a,3b) and the pairs of side flaps (4a,4b,4c,4d), wherein
the respective cuts (5) constituting said opening portion (10) have a wave-form with a pitch of 0.1 mm to 3.0 mm.

5. The container (1) according to any preceding claim wherein the or each wave-form cut (5) has a pitch of 0.1mm.

6. The container (1) of any preceding claim wherein the container (1) is made of cardboard.

7. The container (1) of any preceding claim wherein the or each wave-form cut (5) is formed with a cutting tool (12) with a waved blade (11).
